# EUROPEAN PATENT APPLICATION

(11) **EP 2 058 439 A2**
(43) Date of publication of application: **13.05.2009**
(21) Application number: 08013833.2
(22) Date of filing: 01.08.2008
(51) Int. Cl.: E02F 9/08, B62D 53/02

(54) **An articulated vehicle**

(30) Priority: 12.11.2007 GB 0722053
(71) Applicant: NC Engineering (Hamiltonsbawn) Limited, Hamiltonsbawn Richhill County Armagh , Northern Ireland (GB)
(72) Inventor: Carson, Wilfred, Richhill, County Armagh BT61 9SF (GB); Wilson, David, Markethill, County Armagh BT61 9SF (GB)
(74) Representative: Boyce, Conor

(57) **Abstract**

An articulated vehicle (10) which comprises a chassis having a front portion (18), and a rear portion (12), connected through a coupling mechanism (fig. 3 to 5). The coupling mechanism allows the portions to pivot relative to one another about a vertical axis passing through the coupling mechanism to enable steering of the vehicle and to allow the portions to twist relative to one another about a longitudinal horizontal axis. The coupling mechanism is switchable from a free state in which the portions are relatively free to twist relative to one another, to a locked state in which twisting of the portions relative to one another is resisted.

## Description

The present invention relates to an articulated vehicle.

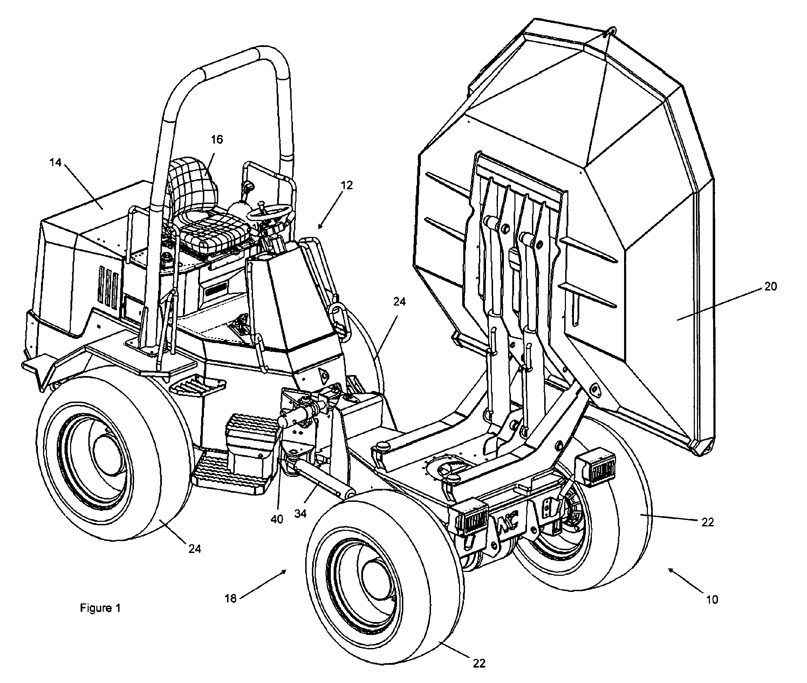

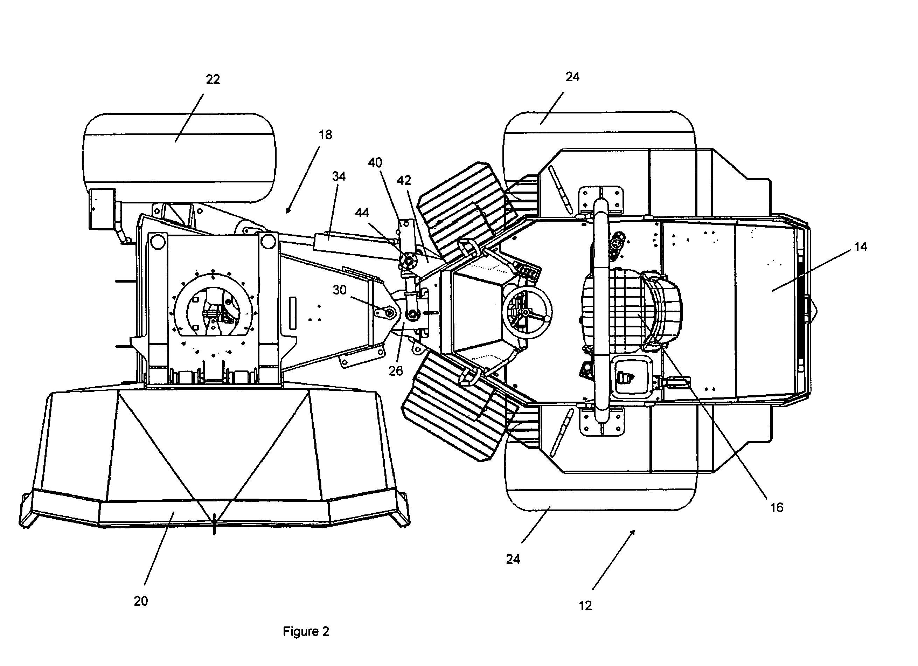

Articulated vehicles of the type shown in Figures 1-4 are known, for example, as produced and marketed by NC Engineering (Hamiltonsbawn) Ltd, Northern Ireland for use as a site dumper.

Such vehicles 10 include an articulated chassis comprising a rear portion 12 on which an engine compartment 14 and a operator's seat 16 are mounted and a front portion 18 to which a skip 20 is pivotably and rotably mounted for operator control from the operator's seat. A drive mechanism, not shown in detail in the drawings for clarity, connects the engine to both the front and rear sets of wheels 22, 24 respectively to provide two or four wheel drive for the vehicle.

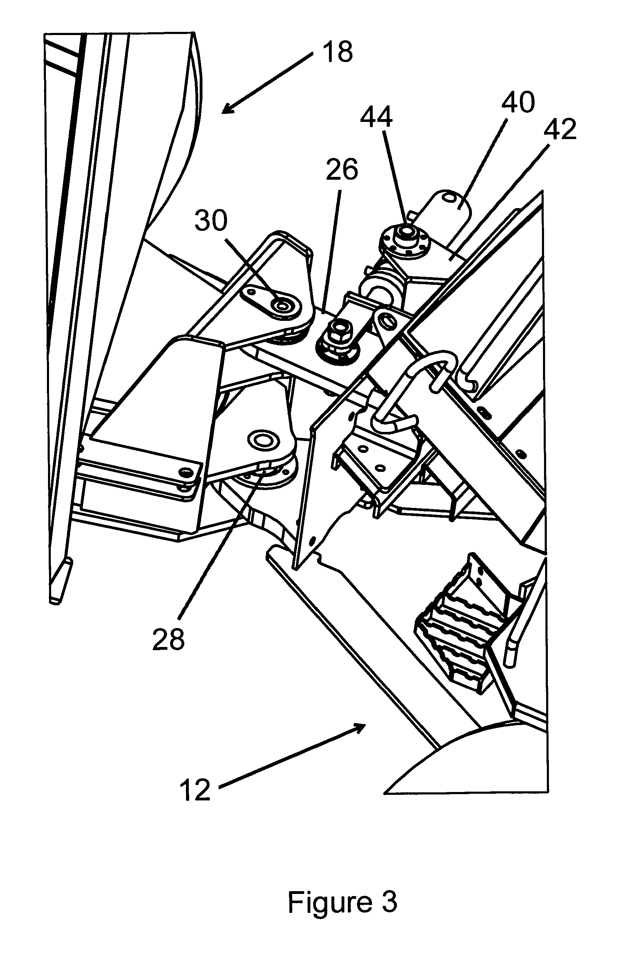

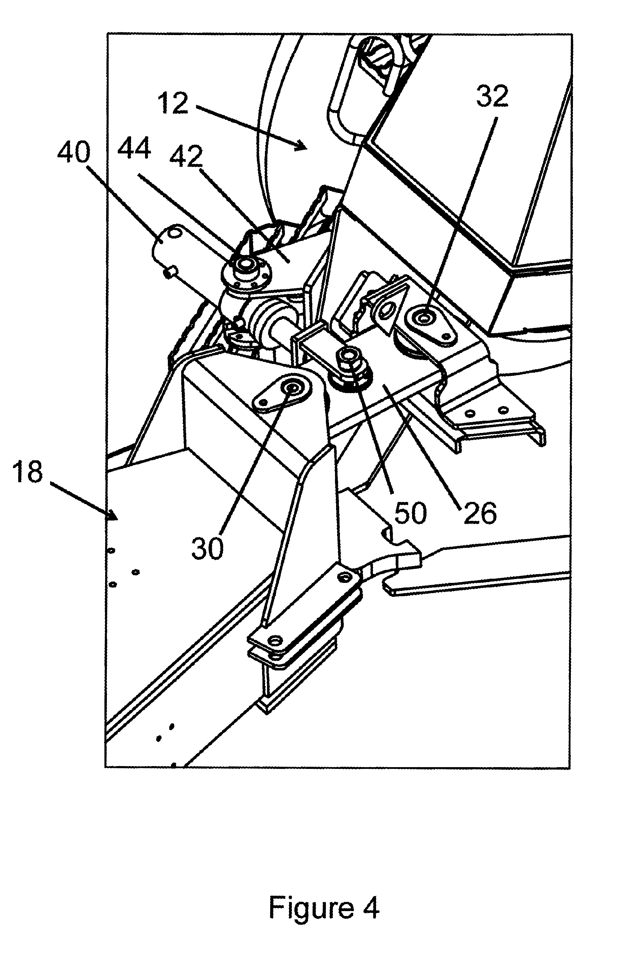

The front and rear portions are coupled together as shown in more detail in Figures 3 to 5. A coupling plate 26 is pivotally connected at each end via a bushing 30 to the front portion 18 and via a bushing 32 to the rear portion 12, Figure 4. Disposed directly below the bushing 30, a spherical bearing 28 also connects the front and rear portions, Figure 3. This enables the front and rear portions of the vehicle when travelling over rough terrain to twist relative to one another with the bushing 30 describing an arc around the centre of the bearing 28 so enabling the front left and right wheels 22 to drop out of level with one another and enable the wheels of the vehicle to remain in contact with the ground so improving vehicle stability and drive over rough terrain.

At the same time, a steering ram 34 disposed at the side of the vehicle and connected between the front and rear portions is driven under operator control of the steering wheel to extend and retract so pivoting the front and rear portions relative to one another to steer the vehicle.

In use, the dumper shown in Figure 1 is capable of receiving a 6 tonne load and dispensing this load from the front, left (as shown in Figure 1) or right of the dumper as required or indeed at any position in the arc of the skip's rotation.

However, it has been found that dispensing load to the left or right can destabilise the dumper with the front portion 18 tending to twist out of alignment with the rear portion 12 possibly causing the vehicle to tip over.

According to the present invention there is provided an articulated vehicle comprising a chassis having a front portion and a rear portion connected through a coupling mechanism allowing said portions to pivot relative to one another about a vertical axis passing through said coupling mechanism to enable steering of said vehicle and to allow said portions to twist relative to one another about a longitudinal horizontal axis characterised in that said coupling mechanism is switchable from a free state in which said portions are relatively free to twist relative to one another to a locked state in which twisting of said portions relative to one another is resisted.

Preferably, when in said free state, said coupling mechanism acts as a damper.

Preferably, said coupling mechanism comprising a linear ram connected between one of said front and rear portions and said coupling mechanism.

Preferably, said ram is one of an hydraulic, pneumatic or an electrically controlled ram.

Preferably, said ram may be driven to extend or retract to counteract twisting of said portions relative to one another.

Preferably, the vehicle comprises a dumper including a skip pivotally and rotatably mounted to said front portion, said skip being movable from a travelling state in which the skip faces forward of the vehicle and disposed flat on the chassis to a dispensing state.

Preferably, said ram is operator controlled.

Alternatively, said ram is automatically controlled in response to the state of the vehicle.

An embodiment of the invention will now be described, by way of example, with reference to the accompanying drawings, in which:
Figure 1 is a perspective view of an articulated vehicle according to the preferred embodiment of the invention in a dispensing state;
Figure 2 is a plan view of the vehicle of Figure 1; and
Figures 3 to 5 are detailed views of a front and rear chassis coupling mechanism for the vehicle of Figure 1.

Referring now to Figures 3 to 5 of the drawings, in particular, the articulated vehicle of the present invention is provided with an improved coupling mechanism to overcome the stability problems of the current site dumper described above when dispensing a load and yet retain the vehicle's ability to travel over rough terrain.

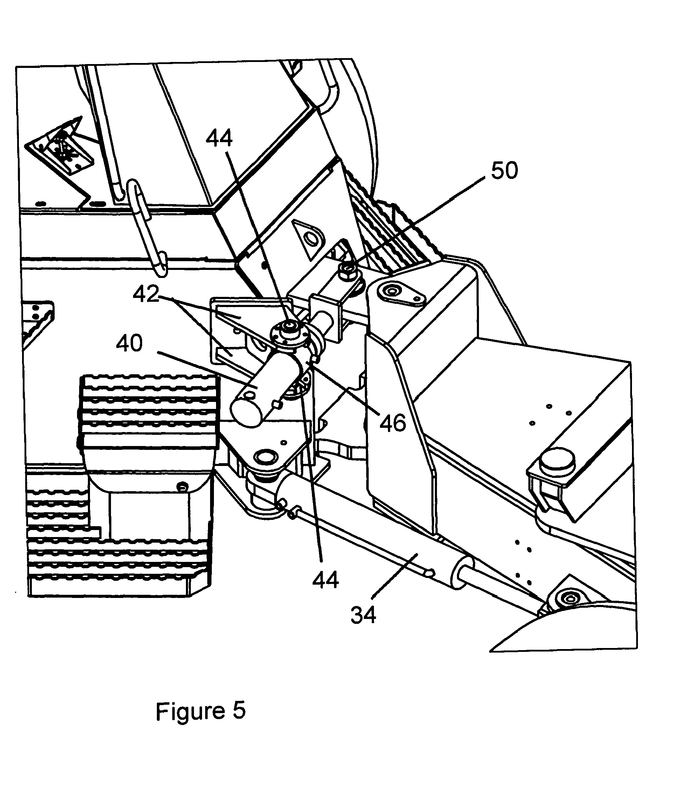

The improved coupling mechanism includes a second double-acting hydraulic ram 40 mounted to the rear portion of the chassis and connected to the coupling plate 26. (The ram could also be arranged to extend from the front portion rather than the rear portion.) In the present embodiment, a pair of horizontal spaced apart mounting plates 42, Figure 5, extends forwardly from body of the rear portion 12. The sleeve portion of the ram 40 is mounted within a vertically disposed circular bracket 46 which is in turn pivotally connected to the mounting plates above and below through bushings 44 to allow the ram 40 to pivot about a vertical axis running through the centres of the bushings 44. The piston of the ram 40 has a bifurcated end comprising two horizontal spaced apart plates extending above and below the coupling plate 26. A bolt 50 in turn passed through the piston plates and the coupling plate 26 to pivotally connect the two.

The ram has four states and, in the present embodiment, is manually controlled from the operator's seat by the operator. When the vehicle is travelling, the ram 40 is not driven and so simply acts as a damper on the twisting of the front and rear portions relative to one another about the horizontal axis.

When the operator is dispensing a load either to the right or the left of the dumper, the operator may engage the ram 40 to drive the ram so that it either tends to extend or retract in accordance with the selection of the operator to counter-act the twisting force on the chassis of the vehicle caused by dispensing the load.

At any time, the operator may then lock the ram 40 to maintain this pressure and maintain the stability of the vehicle.

Once dispensing is complete and the skip is returned to its travelling state, i.e. facing forward of the vehicle and disposed flat on the chassis, the ram 40 may be released.

It will be seen that in more sophisticated embodiments of the invention, the ram 40 can be automatically controlled by a controller (not shown) arranged to sense that the vehicle is dispensing a load from one side or another to drive the ram so as to maintain the stability of the vehicle.

The controller may in turn lock the ram at any time during dispensing and as soon as it is sensed that the skip 20 has returned to its travelling state, the ram can revert to its floating state.

While the above embodiments have been described in relation to an articulated vehicle comprising a site dumper, it will be seen that the invention is equally applicable to any articulated vehicle in which two portions are prone to twisting and instability in one state and where the ability to twist may be desirable in another state.

It will also be seen that while the embodiments have been described in terms of hydraulic control of the vehicle, any aspect of the control can be replaced with either electrical or pneumatic control.

The invention is not limited to the embodiment(s) described herein but can be amended or modified without departing from the scope of the present invention.

## Claims

1. An articulated vehicle comprising:
a chassis having a front portion and a rear portion connected through a coupling mechanism allowing said portions to pivot relative to one another about a vertical axis passing through said coupling mechanism to enable steering of said vehicle and to allow said portions to twist relative to one another about a longitudinal horizontal axis,
**characterised in that**:
said coupling mechanism is switchable from a free state in which said portions are relatively free to twist relative to one another, to a locked state in which twisting of said portions relative to one another is resisted.

2. The articulated vehicle of claim 1 wherein said vehicle is arranged so that when said coupling mechanism is in said free state, said coupling mechanism acts as a damper.

3. The articulated vehicle of any preceding claim wherein said coupling mechanism comprising a linear ram connected between one of said front and rear portions and said coupling mechanism.

4. The articulated vehicle of claim 3 wherein said ram is one of an hydraulic, a pneumatic or an electrically controlled ram.

5. The articulated vehicle of claims 3 or 4 wherein said ram is arranged to be driven to extend or retract to counteract twisting of said portions relative to one another.

6. The articulated vehicle of claims 3 to 5 wherein vehicle comprises operator controls operably connected to said ram.

7. The articulated vehicle of claims 3 to 5 wherein said ram is automatically controlled in response to the state of the vehicle.

8. The articulated vehicle of any preceding claim further comprising a dumper including a skip pivotally and rotatably mounted to said front portion, said skip being movable from a travelling state in which the skip faces forward of the vehicle and disposed flat on the chassis to a dispensing state.
